# EUROPEAN PATENT APPLICATION

(11) **EP 4 723 548 A1**
(43) Date of publication of application: **08.04.2026**
(21) Application number: 24204970.8
(22) Date of filing: 07.10.2024
(51) Int. Cl.: H04L 9/40, H04L 9/32, H04W 12/084

(54) **METHODS AND APPARATUSES FOR MANAGING NETWORK FUNCTION AUTHORIZATION IN A MOBILE COMMUNICATION NETWORK**

(71) Applicant: Deutsche Telekom AG, 53113 Bonn (DE)
(72) Inventor: COLOM IKUNO, Josep, 2100 Korneuburg (AT)
(74) Representative: 2SPL Patentanwälte PartG mbB

(57) **Abstract**

Provided is a method (500) for managing NF authorization in a mobile network using an NRF (116). It is stored (510), at the NRF (116), a network-level profile (403) comprising authorization policy information defining permissions and/or access rights applicable across multiple NF entities. It is received (520), by the NRF (116), a request for an authorization token from a requesting entity (420) to access a target NF entity (410). It is determined (530), by the NRF (116), the authorization token based on at least the network-level profile (403). It is issued (540), by the NRF (410), the authorization token to the requesting entity (420) based on the determined authorization.

## Description

### Field

The present disclosure relates to network function (NF) authorization in mobile networks, specifically to mechanisms for controlling access to NFs in the 5G Core Network (5G CN) and beyond.

### Background

A 5G network is the fifth generation of mobile network technology, following previous generations known as 1G, 2G, 3G, and 4G. It represents an advancement over its predecessors, offering faster data speeds, lower latency, increased capacity, and enhanced connectivity. 5G networks are designed to support a wide range of applications, including mobile broadband, the Internet of Things (IoT), and critical communication services, thereby transforming how devices and systems communicate.

The 5G Core Network (5G CN) is a central part of the 5G network, responsible for managing connectivity, mobility, and data routing. It employs a Service-Based Architecture (SBA), where NFs interact with each other using standardized interfaces, for example, using Application Programming Interfaces (APIs) over Hypertext Transfer Protocol (HTTP-) based protocols. NF refers to a functional building block within the 5G Core Network that provides specific services. Key NFs in the 5G Core include the Access and Mobility Management Function (AMF), Session Management Function (SMF), Policy Control Function (PCF), and Network Repository Function (NRF). Each NF can offer one or more services, NF Services (NFSs) that other NFs can discover and request access and/or authorization to through the NRF. The NRF plays a central role in this architecture by managing NF registration, discovery, and authorization. The NRF refers to a core component in the 5G network architecture responsible for managing NF registration, discovery, and authorization. The NRF maintains a repository of NF profiles, enabling service discovery and access control.

NF instances may be implemented as software running on various physical, virtual devices and/or processes in the network infrastructure. NF instances may be implemented as software running on a server within the 5G core network. NF instances can be located in a centralized data center or distributed in edge computing facilities for low-latency communication.

They can be part of a larger network orchestration and management system, deployed on cloud infrastructure to provide scalability and flexibility. For example, the AMF is responsible for managing user equipment (UE) registration, mobility management, and connection setup. It handles signaling between the user devices and the core network, as well as between the core network and the access network. The NRF is responsible for service registration, discovery, and authorization within the 5G core network. It maintains a repository of NF profiles and helps facilitate service-based interactions between NFs.

For conciseness, the terms NF and NF instance, as well as NF service and NF Service instance, are used indistinctly in this description. A NF/NF service performing an action univocally refers to an instance thereof.

The authorization process in conventional 5G networks involves several key steps. A NF NFS, or another entity on their behalf (e.g. a management and/or orchestration entity), register a NF profile with the NRF. The NF profile provides information related to the associated instance, such as their supported services, instance type, instance identifier, associated identifiers and/or associated endpoints. When a requesting entity, such as another NF, an Application Function (AF), or a monitoring system, seeks to access a target NF's and/or NFS's services, it first requests an authorization token from the NRF. The NRF determines whether to grant or deny access based on the NF profile of the target NF and/or information associated to the requesting entity, such as a provided certificate and/or NF profile. The NF profile of the target NF can define the scope of services and/or operations that the target NF allows other entities/NFs to perform. Once the NRF validates the request against the NF profile, it issues an authorization token to the requesting entity. This token is then used by the target NF to authorize incoming requests from the requesting entity to the target NF, thereby enabling or restricting access to the requested services and/or operations.

The conventional approach to NF authorization relies heavily on the NF profiles of the target NFs to dictate access control. Each NF profile contains predefined rules and conditions that determine which NFs can interact with it and what operations they can perform. The authorization framework may employ the OAuth 2.0 standard to issue and manage authorization tokens. The primary limitation of this approach is its static nature and limited granularity. The NF profiles need to be manually updated whenever there are changes in the network, such as the addition of new NFs, modifications in services, or updates to authorization policies. This manual process can be cumbersome, error-prone, and potentially insecure, as it may lead to inconsistencies and vulnerabilities in the network's authorization structure.

The conventional NF authorization framework in 5G networks is limited in its ability to adapt to the dynamic and complex nature of modern mobile networks. Since authorization decisions are primarily based on static or semi-static NF profiles of the target NFs, the system lacks flexibility and requires manual intervention to update access policies. This can lead to several problems. First, managing NF profiles becomes increasingly complex as the network scales, introducing the risk of inconsistencies and potential security vulnerabilities. The addition of a single instance can result in changes to potentially all registered NF profiles in the network. This could be exploited to introduce signaling multiplication attacks within the core network by repeatedly (re-)instantiating NFs. Second, the static nature of the current framework does not support the need for finer-grained control, such as conditional access based on subscriber identifiers, network slices, or other context-specific parameters. This limited granularity can result in either overly permissive or excessively restrictive access controls, hindering the network's ability to provide tailored services securely and efficiently. Furthermore, the current framework lacks the capability to enforce network-wide policies consistently across different NFs, making it challenging to adapt to changing network conditions, roaming scenarios, or dynamic policy requirements.

Consequently, there is a need for a more flexible and dynamic authorization framework that can provide network-wide, comprehensive and context-aware access control in 5G networks and beyond.

### Summary

This need is addressed by methods and apparatuses in accordance with the appended independent claims. Advantageous embodiments are addressed by the dependent claims.

According to a first aspect of the present disclosure, a method for managing NF authorization in a mobile network using a NRF is proposed. The method comprises storing, at the NRF, a network-level profile comprising authorization policy information defining permissions and/or access rights applicable across multiple NF entities. The method comprises receiving, by the NRF, a request for an authorization token from a requesting entity to access a target NF entity. The method comprises determining, by the NRF, the authorization token based on at least the network-level profile. The method further comprises issuing, by the NRF, the authorization token to the requesting entity based on the determined authorization. This method may enable centralized and efficient authorization control across multiple NF entities in a mobile network. It may reduce redundancy by managing policies at the network level.

The network-level profile in the NRF, as described in the present disclosure, may be a central repository of authorization rules that govern how different NF entities can interact with each other. These rules define which NFs or services are allowed to access certain functions or resources based on specific conditions. Instead of setting individual permissions for each NF and/or NFS, the network-level profile simplifies management by applying broader policies that can be applied across multiple NF entities.

The network-level profile can but does not necessarily apply uniformly across the entire network. It can be designed to cover only specific parts of the network, such as particular geographic regions, trust domains, or network slices. For example, different rules might apply depending on the location of the NFs, the network slice they operate in, or whether they belong to a particular trust domain. This flexibility may allow the network-level profile to enforce different policies in different contexts. When the rules cover the entire network, that would be a valid case, but it represents a more specific application of what is generally a flexible, context-aware system.

An NF entity can encompass an NF, an NF Instance, and an NF Service. NF is an abstract, logical function that performs a specific role in the network. Each NF has a defined purpose, such as managing mobility, handling session control, or enforcing policy rules. Examples of NFs include the AMF or the SMF. An NF Instance refers to a specific, deployed version of an NF. Multiple NF instances can exist to handle different regions, slices, or loads, and each instance may operate independently but perform the same basic role as the abstract NF. For example, one could have one instance of the AMF handling users in one geographical region and another AMF instance managing a different region. These instances allow the network to scale and distribute workloads. The NF Service refers to a set of specific services or operations provided by an NF instance. Each NF offers one or more services, which are accessed by other network functions or external applications. For example, an AMF instance might offer services like registration management and mobility management. Each interaction between network functions may happen through these services.

The requesting entity may be a NF or an Application Function (AF). It may also refer to other entities, such as related to Operations, Administration and Maintenance (OAM), orchestration, tracing and/or logging. An NF is a core component within the network responsible for handling specific tasks like session management or mobility control. When an entity, such as an NF, needs to interact with another NF, it may request authorization to access certain services provided by the target NF. On the other hand, an AF may be an external application that interfaces with the 5G core network to request services or influence network behavior.

The AF may need to access specific network capabilities or control the quality of service for particular application flows. Both the NF and the AF are capable of initiating requests within the network, though they serve different roles.

According to some embodiments, the method further comprises storing, at the NRF, one or more NF profiles associated with respective NF entities. A respective NF profile comprises entity-specific authorization policy information defining permissions and/or access rights applicable for the respective NF entity. The method may further comprise determining the authorization token based on only the network-level profile, or based on both the network-level profile and the NF profile of the target NF entity, or based on both the network-level profile and the NF profile of the requesting entity, or based on the network-level profile, the NF profile of the target NF entity, and the NF profile of the requesting entity. This allows for both network-wide and entity-specific policies to be considered in authorization decisions, providing flexibility. An advantage may be the customization of authorization policies based on specific network function needs.

According to some embodiments, determining the authorization token comprises intersecting the network-level profile and the NF profile of the target NF entity and/or the network-level profile and the NF profile of the requesting entity. This may ensure that both (sub)network-wide and specific NF entity policies are taken into account when determining authorization. This may enhance security and precision by aligning different policy levels.

According to some embodiments, the method further comprises assigning a respective priority to the network-level profile, a further network-level profile and/or the NF profile and/or the parameters thereof, and determining the authorization token by resolving conflicts between the network-level profile and the NF profile based on the assigned priorities. This may ensure that conflicts between network-level and entity-specific policies are resolved systematically. This may allow a consistent enforcement of policies based on the priority structure.

According to some embodiments, determining the authorization token comprises giving the authorization policy information of the network-level profile precedence over entity-specific authorization policy information of the NF profile. This may enforce (sub)network-wide security policies, even if the entity-specific policies allow more access. This may ensure higher-level security policies take precedence, maintaining overall network security. Additionally, such an embodiment allows for better observability, as denied authorization tokens can be traced back to different, conflicting, potentially erroneously-configured security policies at (sub)network-wide and NF profile levels.

According to some embodiments, determining the authorization token comprises applying network-level access rules defined in the network-level profile to enforce more restrictive permissions on the authorization token. The network-level profile may comprise network-level deny-access rules that take precedence over NF-specific allow-access rules in the NF profile. This may ensure that restrictive network-wide rules are applied, overriding any entity-specific allowances. This may increase security by enforcing (sub)network-wide restrictions across several, potentially all NF entities.

According to some embodiments, the network-level profile comprises one or more access control rules that define whether certain types of NF entities are permitted or denied access to specific services of other NF entities. This may allow for the creation of detailed policies governing which NF entities can access specific services. This may provide flexibility and granularity in managing inter-NF communications.

According to some embodiments, the network-level profile comprises one or more match parameters determining when a particular access control rule should be applied across multiple NF entities. This may allow for dynamic rule application based on specific conditions. This may adapt to changing network conditions, ensuring relevant rules are applied at the right time.

According to some embodiments, the one or more match parameters comprise an NF type for which the particular access control rule should be applied, an NF service type for which the particular access control rule should be applied, a location, zone or region for which the particular access control rule should be applied, a group, especially a group name and/or group identifier, to which one or more entities can be associated, for which the particular access control rule should be applied, a network identifier for which the particular access control rule should be applied, and/or a time for which the particular access control rule should be applied. This may add specificity to the conditions for applying access rules, allowing for finer-grained control. This may support location-based, service-specific, or time-sensitive access control policies.

According to some embodiments, the network-level profile comprises one or more parameter-based access rules specifying criteria under which a requesting entity is allowed to access services of a target NF entity, including at least one of: one or more subscriber identifiers and/or a subscriber identifier range, one or more NF instance identifiers and/or NF service instance identifiers, one or more network slice identifiers, one or more network identifiers, one or more country identifiers, and one or more parameter types and/or values. This may allow for parameter-based rules that refine the conditions for NF service access. This may enable precise access control, particularly useful in multi-tenant, slice-based, or geographically dispersed networks. This may additionally enable more precise control in multi-network scenarios, such as roaming, whereas it is desirable to restrict access to only datasets and/or relevant to the other network while protecting the rest of the network from unnecessary accesses.

According to some embodiments, the request for authorization comprises at least one of an NF instance identifier and/or NF service instance identifier of the requesting entity, an NF type or service required from the target NF, and additional parameters related to a service being requested. This may ensure that requests for authorization include detailed information about the requesting and target NF entities. This may improve the accuracy and security of the authorization process.

According to some embodiments, the authorization token comprises information associated with what operations and/or services the requesting entity is allowed to access from the target NF entity and/or what parameters the requesting entity is allowed to access from the target NF entity. Thus, the authorization token may explicitly define the allowed operations and services. This may prevent unauthorized operations and restricts access to only approved services. This may additionally allow to return a token that applies to a broader scope to the one initially requested.

According to some embodiments, the method further comprises the requesting entity using the authorization token for a subsequent request to the target NF entity to access its service. This may enable the reuse of an authorization token for multiple service requests. This may increase operational efficiency by reducing the need for repeated authorization requests.

According to some embodiments, the NRF comprises an API for dynamic modification of the network-level profile by an orchestrator and/or operations, administration, and maintenance (OAM) entity to adapt to changing network conditions without modifying NF profiles. This may allow for real-time adjustments to the network-level profile while keeping NF-specific profiles intact. An advantage may be the ability to adapt to changing network conditions dynamically without affecting individual NF configurations.

According to some embodiments, the method further comprises updating the network-level profile based on a deployment intent received from an orchestrator. The network-level profile may be dynamically generated or modified to reflect a desired end state of the network. This may allow for automatic updates of the network-level profile to reflect changing network deployment strategies. This may simplify network management by aligning profiles with operational goals and ease automation.

According to some embodiments, the method further comprises registering, by the target NF entity, its NF profile with the NRF. This may ensure that the NRF has up-to-date information on each NF entity. It may enable accurate and real-time authorization decisions based on current NF data.

According to some embodiments, the NRF monitors network conditions and adjusts the network-level profile in real-time to enforce network-wide access restrictions based on parameters including network load, security threats, or policy updates. This may enable dynamic adjustment of the network-level profile based on real-time network conditions and may enhance network security and efficiency by responding to current network states.

Several network-level profiles may be defined, such that the NRF may apply a specific, especially a more restrictive, network-level profile in certain conditions, such as in high load or if a security incident is detected. To this effect, a network-level profile may contain additional, applicability information, containing one or more applicability conditions when the network-level profile is valid.

According to some embodiments, the authorization token includes an indication of its validity period, allowing the NRF to restrict access to the target NF entity for a specified duration defined in the network-level profile or NF profile. This may limit the duration of access to the NF entity, enhancing security by controlling the lifespan of the authorization token. Prolonged or unauthorized access may be prevented.

According to some embodiments, the authorization token is reusable for multiple service operations of the target NF by the requesting entity, provided that such reuse falls within the scope of access permissions specified by the network-level profile and the NF profile. This may enable the token to be used for multiple service operations, provided they fall within the predefined permissions. This may reduce a need for generating new tokens for every request, increasing efficiency.

According to a further aspect, a computer program is provided. The computer program comprises instructions, when executed by a processor of an NRF, causing the NRF to perform the proposed method for managing NF authorization in a mobile network. This allows the method to be implemented in software form, providing flexibility for deployment. An advantage is that it can be easily integrated into different network management platforms.

According to a further aspect, an apparatus for managing NF authorization in a mobile network is proposed. The apparatus comprises a memory configured to store a network-level profile comprising authorization policy information defining permissions and/or access rights applicable across multiple NF entities. The apparatus comprises a communication interface configured to receive a request for an authorization token from a requesting entity to access a target NF entity. The apparatus further comprises a processor configured to determine the authorization token based on at least the network-level profile and issue the authorization token to the requesting entity based on the determined authorization. The apparatus enables the implementation of the described concept in hardware form. It may provide a reliable and scalable solution for managing NF authorization in mobile networks.

### Brief description of the Figures

Some examples of apparatuses and/or methods will be described in the following by way of example only, and with reference to the accompanying figures, in which
- Fig. 1: illustrates a reference architecture of a 5G system;
- Fig. 2: illustrates a protocol stack for SBI in a 5G network;
- Fig. 3A: shows a message sequence chart illustrating a registration of an NF within a 5G network;
- Fig. 3B: illustrates a process by which a NF service consumer obtains an access token from the NRF;
- Fig. 3C: illustrates an interaction between an NF Service Consumer and an NF Service Producer;
- Fig. 4: illustrates a block diagram of an apparatus for managing NF authorization in a mobile communication network according to an embodiment;
- Fig. 5: shows a flowchart of method for managing NF authorization in a mobile communication network according to an embodiment;
- Fig. 6: illustrates an interaction between three profiles involved in an authorization process;
- Fig. 7: shows a scenario where NF B communicates with NF A through the SBI;
- Fig. 8: shows a scenario where a network-level profile includes specific rules that prevent PLMNs from accessing location information of UE in another PLMN; and
- Fig. 9: shows a relationship between the deployment intent, NF profiles, and network-level profiles, demonstrating how network conditions and configurations may be adjusted dynamically based on deployment intents.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

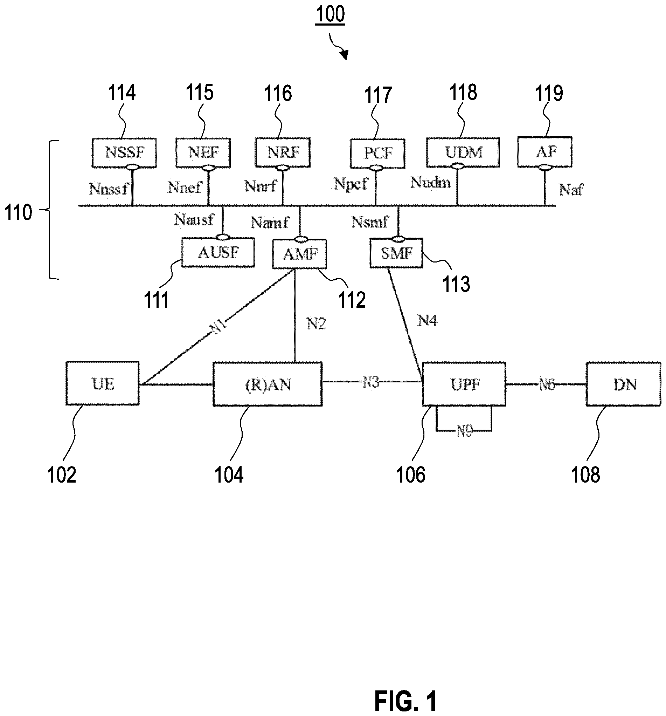

**Fig. 1** represents a non-roaming reference architecture 100 of a 5G system, showcasing various NFs and the interfaces between them. The diagram comprises both core network components and the (radio) access network ((R)AN), illustrating how they may interact to provide end-to-end communication services.

Starting from the left, a User Equipment (UE) 102 represents a mobile device, such as a smartphone or loT device, which connects to the 5G network. The UE 102 communicates with the (R)AN 104. RAN 104 is responsible for managing radio communication between the UE 102 and the core network 110. RAN 104 includes 5G base stations known as gNodeBs (gNBs) that handle radio signal processing, scheduling, and handovers. The interface between UE 102 and the RAN 104 may be labeled Uu, which is the radio interface used for wireless communication.

An AMF 112 is part of the 5G Core Network 110 and may manage user registration, connection, mobility, and security. It may act as a primary point of contact for the UE 102 in the control plane, handling the signaling messages for connection setup and mobility management. AMF 112 may interact with the RAN 104 over an N2 interface, which may be used for control plane signaling between RAN 104 and AMF 112, such as signaling for handovers and session establishment.

A SMF 113 is another key component of the core network 110 that may be responsible for session management and IP address allocation. It may manage the user data sessions, including setting up, modifying, and releasing the sessions. The SMF 113 may communicates with the AMF 112 over a N11 interface, which is used for control signaling related to session management, such as establishing and managing the data sessions between UE 102 and the data network (DN) 108. SMF 113 may also interact with a User Plane Function (UPF) 106 over a N4 interface. The UPF 106 may be responsible for forwarding user data packets, enforcing Quality of Service (QoS) policies, and performing traffic routing. The UPF 106 may serve as anchor point for data traffic coming from and going to the UE 102 and may be responsible for connecting to the external Data Network (DN), such as the Internet or a private enterprise network. The connection between the UPF 106 and the DN 108 is via a N6 interface, which carries user plane traffic to and from an external network.

To facilitate authentication and security, the Authentication Server Function (AUSF) 111 is included in the architecture. The AUSF 111 is responsible for authenticating the UE 102 and ensuring secure access to the network. It may interact with the AMF 112 over the N12 interface for the authentication process, using credentials and keys to verify the identity of the UE 102.

NRF 116 may serve as a central registry for network functions in the 5G core network. It maintains a repository of available NFs and their capabilities, enabling service discovery and communication between NFs. NRF 116 interacts with other NFs such as AMF 112, SMF 113, and others over the Nnrf interface. This interface allows network functions to register themselves with NRF 116, discover other NFs, and obtain information about their capabilities and endpoints.

A Policy Control Function (PCF) 117 may be responsible for managing policy rules in the network, such as QoS policies, access control, UE policies and traffic steering. It may provide policy control decisions to other NFs, ensuring that network resources are allocated and used according to the operator's policies. PCF 117 interacts with the AMF 112, SMF 113, and other NFs over the Npcf interface to provide policy-related information, allowing these functions to enforce the required policies during session and mobility management.

A Unified Data Management (UDM) function 118 may be a central data repository that manages subscriber information, such as subscription data, authentication credentials, and user profiles. It may interact with other NFs like AMF 112 over the Nudm interface to provide user data and policy information needed for mobility management, session management, and authentication procedures.

A Network Exposure Function (NEF) 115 may enable external applications to securely access certain network capabilities and services. It may act as a gateway that exposes network services to external entities while enforcing security and policy controls. NEF 115 may interact with PCF 117, AMF 112, and other NFs over the Nnef interface, allowing external applications to influence the network's behavior, such as requesting QoS adjustments or modifying policies for specific services.

An Application Function (AF) 119 may represent external application services that interact with the 5G core network to request specific network behaviors. AF 119 may communicate with PCF 117 over the Naf interface, requesting policies or configurations to optimize the network for particular application requirements, such as video streaming or low-latency gaming.

The 5G Control Plane (CP) is a part of the 5G network responsible for managing and controlling how data and services flow through the network. It handles functions such as establishing connections, managing mobility as users move between different network areas, and enforcing policies like quality of service. Essentially, the CP oversees the signaling and coordination between different network elements to ensure that user data is delivered correctly and efficiently. In the 5G architecture, the CP primarily uses a Service-Based Architecture (SBA), meaning that the various NFs communicate with each other through APIs and HTTP-based protocols. This approach allows for more flexible and scalable communication between different network components, enabling the network to adapt to varying demands and efficiently manage resources.

The technical realization of SBA compared to previous iterations of 3GPP networks (i.e. pre-5G) includes:
- NFs expose one or more services (NF services)
- NF service registration and de-registration: to make NRF 116 aware of available NF instances, their supported services/functionalities and service endpoint(s)
- NF service discovery: to enable a NF to discover (typically) via NRF 116 other NFs/NF services matching a given search query
- NF service authorization: enables an NF to request authorization of a certain scope via NRF 116 to operate on NF services and enforces it (based on OAuth 2.0, TS 33.501)
- a NF service is an HTTP API described in the 3GPP specifications using OpenAPI
- a Nxxx Service Based Interface (SBI) refers to the services exposed by a NF
- a new CP protocol stack including integrated security

SBls use a newly-defined protocol stack. Instead of GTP-C, it is based on HTTP/2, which compared to HTTP/1 uses binary encoding and is considered more performant.

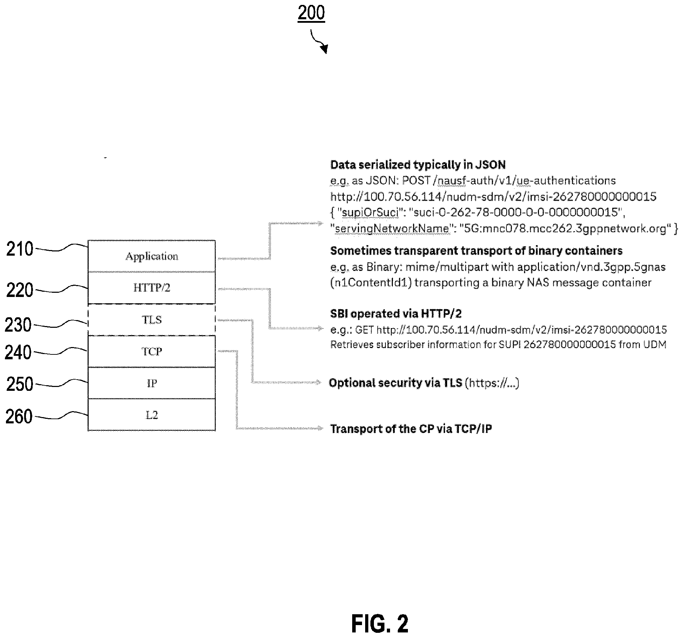

Fig. 2 illustrates a protocol stack 200 for the SBI in a 5G network, showing each layer and its functionality in facilitating communication between NFs. This protocol stack enables the exchange of information in a standardized, secure, and efficient manner within the 5G Core Network.

At the top of the stack 200 is the Application Layer 210, which represents the actual services and functions provided by the 5G network. Data at this layer 210 may be serialized in JSON format, a lightweight data-interchange format that is easy to read and write, as well as human-readable. JSON may be used to structure the messages exchanged between network functions. For example, an HTTP POST request to NRF 116 or UDM 118 might include JSON-formatted data, such as subscriber information or authentication parameters. The example provided in Fig. 2 shows a POST request to the /nausf-auth/v1/ue-authentications endpoint with JSON data containing fields like "supiOrSuci" (subscriber identity) and "servingNetworkName" (the network name). This layer is where business logic resides, defining how the network functions interact with each other through APIs and protocols.

Beneath the application layer 210 is HTTP/2 220, a protocol used for communication between NFs over the SBI. HTTP/2 is a major revision of the original HTTP protocol and introduces features like multiplexing, header compression, and stream prioritization, which enhance the efficiency of data exchange. HTTP/2 allows multiple requests and responses to be sent simultaneously over a single connection, reducing latency and improving overall network performance. The SBI in 5G networks operates primarily over HTTP/2, using methods like GET and POST to retrieve or update network function information. For instance, an HTTP GET request might be used to retrieve subscriber information from UDM 118 using a specified URI. HTTP/2 provides the necessary flexibility and performance enhancements to support the high demand and real-time nature of 5G services.

A Transport Layer Security (TLS) layer 230 may provide an optional security mechanism to ensure the confidentiality, integrity, and authenticity of data transmitted over the network. TLS is a cryptographic protocol designed to provide secure communication over a computer network, using encryption to protect data from eavesdropping and tampering. In the context of the SBI, TLS is used to secure the HTTP/2 communication channel, ensuring that sensitive information exchanged between network functions, such as authentication details and subscriber data, is protected against unauthorized access. By encrypting the data in transit, TLS helps maintain the privacy and security of the network's operations. This layer is optional, but its use is highly recommended, especially for sensitive communications involving personal or subscriber information. In SBI, mutual TLS (mTLS) is employed, in which both ends of the communication provide certificates, such that the identity of both can be verified.

Below TLS 230 is a Transmission Control Protocol (TCP) layer 240. TCP is a core protocol of the Internet Protocol (IP) suite, providing reliable, ordered, and error-checked delivery of a stream of data between applications. In the context of the 5G network, TCP is responsible for establishing a connection between communicating entities, managing the flow of data, and ensuring that data packets are delivered accurately and in the correct order. TCP segments the data into smaller packets, transmits them to the receiving network function, and reassembles them into the original message. This layer is important for SBI as it provides a dependable transport mechanism, ensuring that the data exchange between network functions is consistent and error-free.

An Internet Protocol (IP) layer 250 may be responsible for routing the data packets across the network. IP is a network layer protocol that defines the addressing scheme and routing process for the data as it travels through the network. In the 5G core network, IP may ensure that the packets are directed to the correct destination based on their IP addresses. Each network function, such as AMF 112, SMF 113, or NRF 116, may be assigned an IP address, allowing data to be transmitted across the network efficiently. IP handles packet forwarding, fragmentation, and reassembly, facilitating the movement of data across various network segments.

At the base of the stack is the Layer 2 (L2) 260, which represents the data link layer in the OSI model. L2-layer 260 may be responsible for the direct, node-to-node transfer of data between network devices. It provides the means for data to be transmitted over a physical link, such as Ethernet or a wireless link. L2 ensures that the data frames are transmitted to the next node in the network path, providing error detection and correction at the data link level. This layer is important for the actual transport of data over the physical medium, facilitating the movement of data frames between network functions and ensuring that higher-layer protocols can communicate seamlessly.

Applications operate on HTTP based on operations including parameters (e.g. HTTP GET, HTTP POST), which return a response with the result(s). This is analogous to functions being called within a computer program.

An important functionality is that of authorization. SBI integrates granular authorization of NF services.
- The 5GS can restrict what NFs can do what operations based on scopes. A scope can restrict per NF service permissions for given NF types, NF instance IDs, NF service instance IDs
- NF service consumers retrieve an OAuth2 token from the NRF according to their permission.
- The token is verified by the NF service producer

The scope information may be stored in the NF profile, which is associated to a specific NF instance. The NF profile is typically registered by the NF instance itself. However, it is also possible that other entities register an NF profile on behalf of an NF instance, typically as part of the instance deployment process.

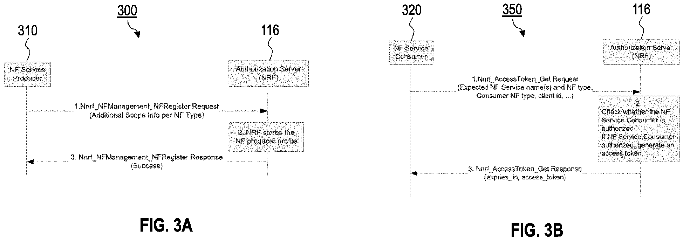

Fig. 3A shows a message sequence chart 300 that illustrates the registration process of an NF within a 5G network. The chart 300 shows the interaction between two main entities: a NF Service Producer 310 and the Authorization Server (NRF 116). The purpose of this interaction is to register the NF 310 with the NRF 116, allowing it to be recognized and authorized to participate in the 5G network's service-based architecture (SBA).

On the left side of chart 300, the NF Service Producer 310 is depicted. This entity represents a network function (e.g., AMF, SMF) that offers services to other NFs within the network. NF Service Producer 310 needs to register with the NRF 116 to advertise its services and make itself discoverable to other network functions. During the registration process, the NF Service Producer 310 may provide information about its capabilities, including the services it offers and the conditions under which these services can be accessed.

On the right side of the chart is the Authorization Server (NRF 116). NRF 116 is a core component in the 5G network architecture responsible for managing the registration, discovery, and authorization of network functions. It maintains a repository of NF profiles, which include details about the services offered by each NF, their endpoints, and access conditions. By storing and managing these profiles, the NRF 116 may enable service discovery and ensures that network functions can interact securely and efficiently.

The sequence chart 300 illustrates a three-step process:
1. Nnrf_NFManagement_NFRegister Request: A first step involves the NF Service Producer 310 sending a registration request to the NRF 116. This message is labeled as "Nnrf_NFManagement_NFRegister Request" and includes "Additional Scope Info per NF Type." In this context, the NF Service Producer 310 may provide detailed information about its services, including the scope of services it offers, endpoints, and any conditions or limitations under which these services can be accessed by other NFs. The "Additional Scope Info" indicates that the NF 310 provides specific details tailored to its type, such as access control policies or the range of operations it supports. This information helps the NRF 116 understand how the NF 310 fits into the network and what services it can offer to other NFs.
2. NRF 116 stores the NF Producer Profile: Upon receiving the registration request, the NRF 116 processes the provided information and stores the NF producer profile in its repository. This step is not depicted as a separate message but is an internal action within the NRF 116. Storing the NF profile may involve cataloging details of the NF 310, including its services, endpoints, and any access restrictions. By maintaining this profile, the NRF 116 makes the NF 310 discoverable to other network functions, enabling efficient service-based interactions. The stored profile can include parameters like service URLs, supported interfaces, security policies, and other metadata relevant to the NF's operation within the network.
3. Nnrf_NFManagement_NFRegister Response: After successfully storing the NF profile, the NRF 116 sends a response back to the NF Service Producer 310. This response is labeled "Nnrf_NFManagement_NFRegister Response" and indicates a successful registration process. The response confirms that the NRF 116 has registered the NF 310 and that it is now available to provide its services to other network functions. This message may also include additional details, such as registration status or identifiers that the NF 310 can use for future interactions with the NRF 116 or other network functions.

When (another) NF requests an authorization token to operate on a given NF, it may be requested to the NRF 116 an OAuth2 token.

The message sequence chart 350 of **Fig. 3B** illustrates a process by which a Network Function (NF) Service Consumer 320 obtains an access token from the Authorization Server, represented by NRF 116. The chart 350 shows an interaction between two main entities: the NF Service Consumer 320 and the Authorization Server (NRF 116). The purpose is to authorize the NF Service Consumer 320 to access the services of other network functions (e.g., NF 310) securely.

On the left side of chart 350, the NF Service Consumer 320 is shown. This entity represents a network function within the 5G network that wishes to consume services provided by other NFs (e.g., NF 310). Examples of NF Service Consumers 320 include the Session Management Function (SMF 113), which may need to access services offered by the Policy Control Function (PCF 117), or the Access and Mobility Management Function (AMF 112) that needs to interact with the Unified Data Management (UDM 118) function. Before accessing the services of other NFs, the NF Service Consumer 320 must first obtain an access token from the NRF 116 to ensure it is authorized to make such requests.

On the right side is the Authorization Server (NRF 116). NRF 116 serves as the central repository and authorization server in the 5G core network. It manages the registration, discovery, and authorization of network functions. In this process, NRF 116 is responsible for verifying the identity and permissions of the NF Service Consumer 320 and issuing an access token that grants it the authority to interact with other NFs securely. By acting as the authorization server, NRF 116 may ensure that only authorized network functions can communicate with each other, thereby enforcing security and access control within the network.

The sequence of interactions is as follows:
1. Nnrf_AccessToken_Get Request: A first step involves the NF Service Consumer 320 sending a request to the NRF 116 to obtain an access token. This message is labeled "Nnrf_AccessToken_Get Request" and may include details such as the expected NF Service name(s) and NF type, the consumer NF type, client ID, and other relevant information. The message indicates the specific services the NF Service Consumer wishes to access and identifies the NF requesting access. For example, the message may specify that the SMF (the NF Service Consumer) wants to access services provided by the PCF (the target NF). The client ID uniquely identifies the NF Service Consumer, allowing the NRF 116 to validate its identity and determine if it is permitted to access the requested services.
2. Authorization Check by NRF: Upon receiving the access token request, NRF 116 performs an internal check to verify whether the NF Service Consumer 320 is authorized to access the requested services. This step involves evaluating the NF Service Consumer's registration details, its profile stored in the NRF, and the network-level and NF-specific policies that govern access control within the 5G core network. If the NF Service Consumer meets the authorization requirements, NRF 116 proceeds to generate an access token. This token encapsulates the permissions granted to the NF Service Consumer 320, specifying which services it can access and under what conditions. This step is needed for maintaining the security and integrity of the network by ensuring that only authorized NFs can interact with each other.
3. Nnrf_AccessToken_Get Response: After completing the authorization check, NRF 116 sends a response back to the NF Service Consumer 320. This message is labeled "Nnrf_AccessToken_Get Response" and contains the access token along with an "expires_in" parameter. The access token is a digital credential that the NF Service Consumer 320 can use to authenticate itself when accessing the services of other NFs. The "expires_in" parameter indicates the validity period of the access token, defining how long the token can be used before it expires. The NF Service Consumer must use this token within the specified timeframe to access the desired services. If the token expires, the NF Service Consumer 320 will need to request a new one from the NRF 116.

The authorization token is included in the requests towards the NF, such that it can be verified by the receiving end.

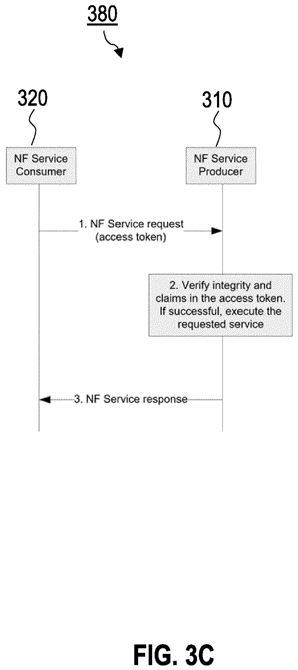

The message sequence 380 chart of Fig. 3C illustrates the interaction between two main entities in a 5G network: the NF Service Consumer 320 and the NF Service Produce 310. It demonstrates the process by which the NF Service Consumer 320 requests a service from the NF Service Producer 310, and how the producer 310 verifies and processes this request. The sequence highlights the importance of the access token in ensuring authorized service access within the 5G service-based architecture (SBA).

On the left side of chart 380 is the NF Service Consumer 320, which represents an NF within the 5G core network that needs to access services offered by another NF. Examples of an NF Service Consumer 320 could include AMF 112, which may request policy control services from PCF 117, or SMF 113, which might interact with UDM 118 to retrieve subscriber data. The NF Service Consumer 320 must have an access token that proves it is authorized to request services from the NF Service Producer 310.

On the right side of chart 380 is the NF Service Producer 310, which is the network function that provides services to other NFs within the 5G core network. The NF Service Producer could be the PCF 117, UDM 118, or any other NF that offers services such as session management, mobility management, or policy enforcement. The NF Service Producer 310 may be responsible for verifying that any service requests it receives are legitimate and authorized, ensuring that only valid consumers can access its services.

The sequence of interactions begins as follows:
1. NF Service Request: A first step involves the NF Service Consumer 320 sending a service request to the NF Service Producer 310. This message is labeled as "NF Service request" and includes the access token that was previously obtained from the NRF 116. The access token serves as a digital credential that proves the NF Service Consumer 320 is authorized to request the service. The token may contain claims that specify the consumer's identity, the scope of services it is allowed to access, and any other relevant conditions such as time constraints or permissions. This step initiates the interaction between the two NFs and is needed for enabling secure and authorized service-based communication in the 5G network.
2. Verify Access Token Integrity and Claims: Upon receiving the service request, the NF Service Producer 310 begins the process of verifying the access token. This is an internal step for the service producer 310, and it may ensure that the token's integrity is intact, meaning it has not been tampered with or altered since it was issued by the NRF. The NF Service Producer 310 checks the claims contained within the token, such as the identity of the NF Service Consumer 320 and the scope of the requested service. The service producer ensures that the consumer is authorized to perform the requested action and that the token is still valid (i.e., it has not expired). If the token verification is successful, the NF Service Producer 310 may execute the requested service. If the token is invalid or unauthorized, the service request would be rejected. This step is needed for maintaining the security and integrity of service interactions within the 5G network, preventing unauthorized access to critical services.
3. NF Service Response: After successfully verifying the access token and executing the requested service, the NF Service Producer 310 sends a response back to the NF Service Consumer 320. This message, labeled "NF Service response," contains the outcome of the service execution. The response could include the requested data, confirmation of an action taken, or other relevant information depending on the type of service that was requested. The response may complete the interaction between the NF Service Consumer 320 and the NF Service Producer 310, enabling the consumer to proceed with its operations based on the received service.

In the 5G network, scopes are used to define which specific services or operations an NF is authorized to access. These scopes vary depending on the type of NF and the services it offers. For example, for the AMF 112, a scope might define that it can only perform registration or mobility management for users. In this case, the scope of the authorization token would include the services related to these operations, ensuring that the AMF 112 is restricted to only handling tasks like user registration or handover management.

For an SMF 113, the scope might include session establishment and modification services. The authorization token would specify that the SMF 113 can create, modify, or terminate sessions for user devices, ensuring that its access is limited to session-related operations.

In a more granular approach, the scope could also be defined at the level of specific NF service operations. For example, if a PCF 117 is interacting with an SMF 113, the token might allow only specific operations like updating session policies or retrieving session-related data. This ensures that the PCF 117 has permission to perform very particular tasks without having unrestricted access to all SMF services.

The scope might also specify resources, such as limiting access to a particular network slice or a specific NF instance within a network. For instance, a scope could be defined such that the authorization token allows access only to the UPF 106 in a specific network slice, or to a particular instance of the AMF 112 handling users in a certain region. These scopes may ensure that access is tightly controlled and tailored to the specific roles and responsibilities of each NF.

Currently, the information regarding who is allowed to access a given NF service, and in what manner (scope) is based on information in the NF profile of the NF (service) providing the service. While this seems like a simple solution, it has some (big) drawbacks:
- The entity registering the NF profile (typically NF itself, but it could also be OAM) must keep the NF profile up-to-date
- The addition of a new NF (e.g. a new instance) may result in having to change multiple, potentially many, NF profiles. This can potentially lead to issues (or even worse attacks) based on message amplification, i.e. where a single message results in multiple actions/messages (update NF profile)
- The NRF should filter out this information when returning an NF profile. A NF consuming an NF service should just ask the NRF for authorization, it should not (even more, it should not be able to) assess whether it has authorization

Currently, thus, the authorization token, and its scope, is based entirely on the NF producer's 310 NF profile. While there are some discussions on also taking into consideration the NF consumer's NF profile, it is currently not possible to provide (sub-)network-wide restrictions/generic authorization policies to the NRF 116, such that they can be combined with the information in NF profile(s). As such, the current level of abstraction an NRF 116 is aware of is that of NF profile.

Embodiments of the present disclosure propose to enhance the NRF-based authorization framework to allow for (sub-)network-wide policies.

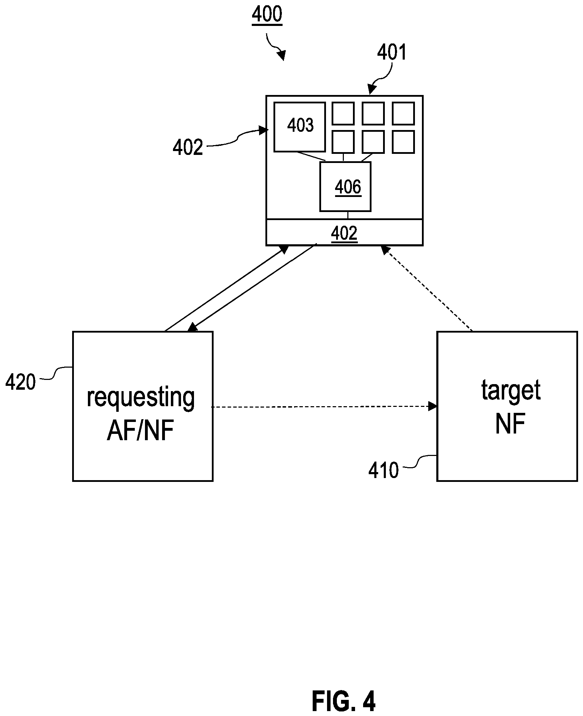

**Fig. 4** schematically illustrates a block diagram of an apparatus 400 for managing NF authorization in a mobile communication network according to an embodiment of the present invention.

Apparatus 400 comprises a memory 402 configured to store a network-level profile 403. The network-level profile comprises authorization policy information defining permissions and/or access rights applicable not only for a single NF entity but across multiple NF entities of the mobile communication network. Apparatus 400 further comprises a communication interface 404 configured to receive a request for an authorization token from a requesting entity 420 to access a target NF entity 410. Apparatus 400 further comprises a processor 406 configured to determine the authorization token based on at least the network-level profile, and issue the authorization token to the requesting entity 420 based on the determined authorization.

Apparatus 400 may be implemented as part of the NRF 116 within the 5G core network, designed to manage the authorization of NFs. The memory 402 is used to store a network-level profile 403, which contains authorization policies that define which NFs are allowed to access other NFs. These policies are not limited to a single NF but apply across various NF entities, allowing centralized control over network access permissions. The communication interface 404 may use secure communication protocols like HTTP over TLS to interact with other network components. It receives authorization requests from a requesting entity 420, which could be another NF or an external Application Function (AF), aiming to access a target NF entity 410. The processor 406 is responsible for determining whether the requesting entity should be granted access based on the stored network-level profile 403. It evaluates the request by comparing it with the authorization policies in the network-level profile 403, considering factors such as the NF type, services requested, and any additional scopes that may apply. Once the processor 406 has verified the request, it generates and issues an authorization token back to the requesting entity 420, allowing it to access the target NF entity. The authorization token may be an OAuth 2.0 token that defines the allowed operations and services the requesting entity can perform on the target NF 420.

This implementation of apparatus 400 ensures secure and efficient management of NF interactions within the mobile communication network, centralizing control over authorization and access rights.

For a hardware implementation of apparatus 400, it could be realized as a dedicated server or a network appliance integrated into the 5G core infrastructure, specifically within the NRF 116. The memory 402 could be a combination of volatile (RAM) and non-volatile memory (e.g., SSD or HDD), where the network-level profile 403 is stored. This memory may hold all the authorization policies, configuration data, and potentially cache frequently accessed profiles for performance optimization.

The communication interface 404 may be a network interface card (NIC) supporting highspeed communication protocols such as Ethernet and optical connections, ensuring fast and secure communication between the apparatus and other network functions. It may be equipped to handle HTTP/2 over TLS or other secure communication protocols as required by the 5G Service-Based Architecture (SBA). The hardware for the communication interface might also include integrated security modules (e.g., a TPM or hardware security module) for handling encryption and secure token exchanges. The processor 406 may be a high-performance multi-core CPU or ASIC (Application-Specific Integrated Circuit) specifically designed for network operations. In some cases, a GP-GPU or FPGA could be used to accelerate specific tasks related to policy evaluation and token generation. The processor 406 may run software components that handle authorization logic, token generation, and decision-making based on the network-level profile stored in memory. Additionally, the apparatus 400 could include redundant power supplies and cooling mechanisms to ensure uptime and reliability, as this component is critical for managing authorization across the network. The server or appliance could also be deployed in a cloud environment with virtualized hardware resources, enabling scalability as the network grows.

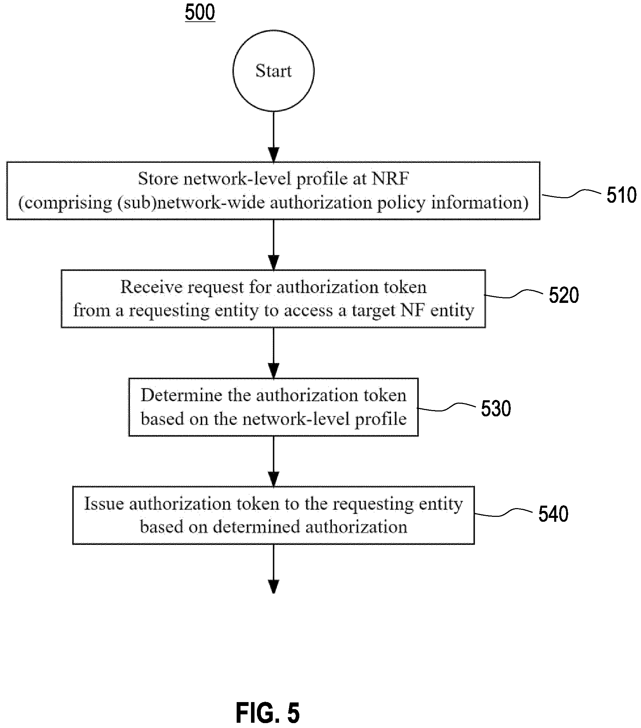

Apparatus 400 may implement a method 500 for managing NF authorization in a mobile network using an NRF 116. A schematic flowchart of method 500 is shown in Fig. 5.

Method 500 includes storing 510, at the NRF 116, a network-level profile 403 comprising authorization policy information defining permissions and/or access rights applicable across multiple NF entities. Method 500 includes receiving 520, by the NRF 116, a request for an authorization token from a requesting entity 420 to access a target NF entity 410. Method 500 includes determining, by the NRF 116, the authorization token based on at least the network-level profile 403. Method 500 further includes issuing, by the NRF 116, the authorization token to the requesting entity 420 based on the determined authorization.

Apparatus 400 may further store, at the NRF 116, one or more NF profiles 401 associated with respective NF entities. A respective NF profile may comprise entity-specific authorization policy information defining permissions and/or access rights applicable for the respective NF entity. Thus, apparatus 400 can also store NF profiles 401 at the NRF 116, which are specific to individual NF entities. Each NF profile contains authorization policies that are tailored to the respective NF entity, defining the permissions and access rights for that particular entity. These profiles allow for more granular control over the authorization, ensuring that specific rules can be applied to individual NFs or their services, rather than relying only on broader, network-wide policies.

An NF entity may refer to the NF itself, any specific NF instances that are deployed in the network, the NF services they provide and/or instances thereof. The NF is the logical function, such as the AMF 112, which performs a specific role in the network. An NF instance is a specific deployment of that NF in a particular location or network slice, with its own configuration and operational status. NF services refer to the specific operations or tasks provided by an NF instance, such as session management or mobility management.

By storing both network-level profiles and NF-specific profiles, the NRF 116 may ensure that authorization decisions can be efficiently made at both a broad and detailed level. This flexibility allows the network to enforce global policies across many and/or all NF entities while also tailoring specific rules for each individual NF, NF instance, or NF service.

Processor 406 may be configured to determine, at the NRF 116, the authorization token based on only the network-level profile 403. Thus, the processor 406 may be designed to evaluate requests for authorization tokens by relying solely on the network-level profile 403 stored at the NRF 116. This means that instead of looking at specific profiles 401 for each NF entity, the processor 406 may use the broader set of authorization rules that apply across the entire network or sections of it. These rules define which types of NFs or services can access other NFs, independent of any individual entity-specific policies. This may be implemented by having the processor 406 retrieve and parse the network-level profile 403 when it receives a request for an authorization token. The profile 403 may contain global rules that define access permissions for different NF types or services across the network. The processor 406 may match the details in the request, such as the requesting NF's type and the service being requested, against these rules. If the request aligns with the policies in the network-level profile, the processor 406 may generate an authorization token and issue it to the requesting NF 420.

Processor 406 may be configured to determine, at the NRF 116, the authorization token based on both the network-level profile 403 and the NF profile 401 of the target NF entity. This means that the processor 406 may look at the broader, network-wide authorization rules from the network-level profile 403 and combine them with the specific policies defined for the target NF entity, which may include more detailed or restrictive rules for that particular NF instance or service. This may be implemented by the processor 406 first retrieving the network-level profile 403 when a request for an authorization token is received. The network-level profile 403 contains general rules about which types of NFs or services can access other NFs across the network. Then, the processor 406 may also access the NF profile 401 associated with the target NF. The NF profile 401 contains authorization policies specific to that particular NF instance or service, which may define permissions based on more granular details like resource types or specific service operations. To determine the final authorization decision, the processor 406 may compare the request against both profiles. If the request satisfies the conditions in both the network-level profile and the NF profile, the processor 406 may generate the authorization token and issues it to the requesting NF. The token may reflect the combined permissions, ensuring that the access granted is in line with both the network-wide policies and the specific rules for the target NF.

Processor 406 may be configured to determine, at the NRF 116, the authorization token based on both the network-level profile 403 and the NF profile 401 of the requesting entity 420. In this setup, the processor 406 may check not only the general network-wide rules for authorization but also the specific policies related to the requesting NF entity 420. This may ensure that the requesting entity 420 has the proper permissions based on both its own configuration and the broader network policies. Technically, when a request for an authorization token arrives, the processor 406 may first retrieve the network-level profile 403 from memory 402, which contains overarching rules that apply to multiple NF entities across the network. These rules specify what types of services and operations are allowed in general across the network. Next, the processor 406 may access the NF profile 401 associated with the requesting NF entity 420. This profile may contain detailed, entity-specific permissions, such as limitations on which services the requesting NF is allowed to use, specific data sets it can access, or restrictions based on its NF type or instance. The processor 406 may then evaluate the request by comparing it against both the network-level profile 403 and the requesting NF's profile 401. If the request satisfies the conditions in both profiles, the processor 406 may generate an authorization token, reflecting both sets of rules, and issues it to the requesting entity.

Processor 406 may be configured to determine, at the NRF 116, the authorization token based on the network-level profile 403, the NF profile 401 of the target NF entity 410, and the NF profile 401 of the requesting entity 420. This approach ensures that the authorization decision is based on a comprehensive set of rules, including general network-wide policies, the specific permissions related to the target NF, and the restrictions or permissions associated with the requesting NF. Technically, when a request for an authorization token arrives at the NRF 116, the processor 406 may first access the network-level profile 403 from memory 402. This profile contains 403 general rules that define which types of NFs are allowed to interact with others across the network. It sets the broad conditions for authorization, such as which services or operations are permitted between NFs. The processor 406 may then retrieve the NF profile 401 of the target NF entity 410, which includes specific policies related to that particular NF instance or service. This profile might define restrictions such as which NFs can access it, what data can be shared, or which operations are allowed for certain NF types or instances. By evaluating this profile, the processor ensures that the target NF's rules are respected, preventing unauthorized access. Next, the processor 406 may fetch the NF profile 401 of the requesting NF entity 420. This profile contains the permissions and capabilities of the NF that is requesting access. It might specify what types of services the requesting NF 420 is allowed to use, any limitations on the scope of its requests, or specific restrictions on data access. The processor 406 may then perform a comprehensive evaluation by comparing the request against all three profiles: the network-level profile, the target NF profile, and the requesting NF profile. If the request aligns with the rules in all three profiles, the processor 406 may generate an authorization token and issues it to the requesting NF 420. The token may reflect the combined permissions and constraints from the network-level and both NF profiles.

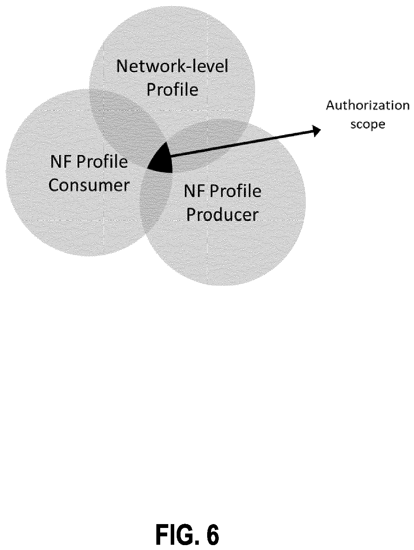

This intersection of all three profiles is schematically illustrated in Fig. 6. Fig. 6 illustrates the interaction between three profile types involved in the authorization process, for which each type may also represent multiple profiles: the network-level profile, the target NF profile (NF profile for the producer), and the requesting NF profile (NF profile for the consumer). The network-level profile contains broad, overarching authorization policies that apply across multiple network functions. It provides a general framework governing which network functions can access others and under what conditions. The NF profile of the consumer represents the specific authorization policies that apply to the requesting entity 420. This profile contains detailed rules governing what the consumer NF is permitted to request, such as the specific services or data it is allowed to access. On the other side, the NF profile of the producer corresponds to the target entity 410 that the consumer 420 is attempting to access. This profile contains specific rules about which entities can access its services, what operations are permitted, and any restrictions related to the data or services it provides. The intersection of these three profiles - network-level, consumer NF, and producer NF - defines the final authorization decision. This may ensure that access control is determined by both general network-wide policies and the more specific rules governing the individual network functions involved. This layered approach may enhance security and granularity in managing access rights, making sure that both the requesting and target entities adhere to network-wide and specific access rules.

The NRF 116 may be enhanced, such that it can also consider network-level information. This information is termed network-level profile. It differs from typical NF profiles in that it is not meant to be queried by other NFs directly.

NF profiles are self-contained and relate to a specific NF instance. They are queried, returned by the NRF 116, and evaluated by the querying NF 420 to evaluate which of the received NF profiles is the most preferred. On the other side, the purpose of the network-level profile 403 is to provision the NRF 116 with network-level authorization policies.

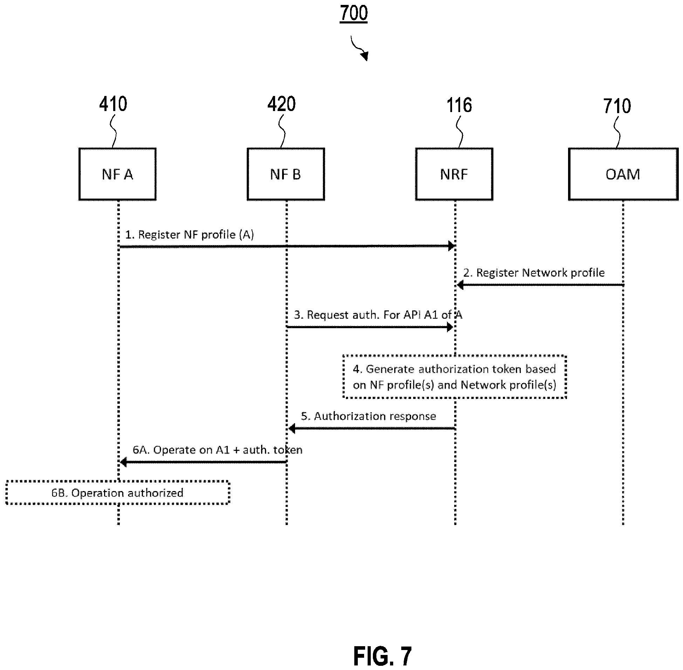

The example in Fig. 7 illustrates a case where NF B (e.g. an AMF) would end up communicating with NF A (e.g. SMF) via SBI. We consider that a network profile 403 contains the following information:
- one or more validity conditions under which this network profile is valid
- whether allow/not allow rule
- match parameters, considering
   ∘ NF type
   ∘ NF service type
   ∘ Location information
   ∘ Group information
   ∘ Network identifier(s)
   ∘ Time information

At 1), NF A registers its NF profile in the NRF 116. In this case, we assume that the NF profile contains a set of allowedRuleSet information that allows certain NFs to access NF Service (API) A1 of NF A. From this information, NF B would not be allowed to operate on API the PDU Session NF service, which we call A1.

At 2), OAM 710 provisions a network profile 403, which acts as an authorization policy, containing an "allowed rule" such that AMFs are authorized to operate on the PDU Session API of SMFs.

At 3), NF B requests an authorization token for A1.

At 4), based on the network profile 403, the NRF 116 issues an authorization token so that NF B (and SMF instance) can access API A1 of NF A. Although allowedRuleSet in the NF profile of A would not have allowed NF B to access the API, the network profile information takes precedence, and the token is issued.

At 5), an authorization token is issued for NF B to operate on A1.

At 6), a request to operate on A1 + the authorization token is sent to NF A, which validates that the provided token is valid.

A new NF service in the NRF 116 is considered to provision network profiles, Nnrf_NWManagement. As opposed to Nnrf_NFManagement, which is used to provision/query NF profiles, which are associated with a specific NF instance, the Nnrf_NWManagement API can be used to provision network profiles, which are not (necessarily) associated with a specific NF instance.

The example in Fig. 7 shows a scenario where NF B (such as an AMF) communicates with NF A (such as an SMF) through the SBI. Initially, NF A registers its profile 401 in the NRF 116, which specifies which entities can access its services. In this case, NF B is not authorized to access a particular API of NF A, specifically the PDU Session service. Later, an OAM system provisions a network profile 403 that authorizes AMFs to access this service of SMFs. When NF B requests an authorization token for this service, the NRF 116 issues it based on the broader network profile 403 that takes precedence over the specific restrictions in NF A's profile 401. As a result, NF B receives the token and can now access the API of NF A. Additionally, a new service called Nnrf_NWManagement is introduced in the NRF 116, which handles network profiles. Unlike the existing Nnrf_NFManagement service that manages profiles tied to specific NF instances, this new service may manage network profiles that are not tied to any particular instance but apply more generally across the network.

A further case that network-level authorization rules may provide is that of finer control over the authorization scope. It may be desirable to limit the authorization not only based on the operation itself, but rather also based on the parameters. An example of such granularity being especially useful for the case of roaming:
- Allow NFs of other PLMNs to operate only on subscribers (UE SUPI) of that PLMN ID (e.g. to minimize the risk of information leakage)
- Disallow the retrieval of certain UE subscription profiles (e.g. of a sensitive nature) to PLMNs of specific countries

In this case, we consider that the network profile can also contain parameter information, especially including the following (plus examples)
- Subscriber identifier(s): allow NFs to operate only on specific subscribers
- Instance identifier(s): isolate specific NF instances or allow specific NF instances broad access without having to change every single NF profile
- Network identifier(s): allow NFs to operate only on its own subscribers/UEs, especially in the case of roaming
- Country identifier(s): do not allow NFs pertaining to a given country (as specified by the MNC in the PLMN ID)
- Slice-related information: isolate NFs providing services to specific slice(s) to communicate with other NFs, or to easily enable all NFs serving a given slice to communicate with other NFs serving said slice(s)
- Parameter type(s) and/or value(s)

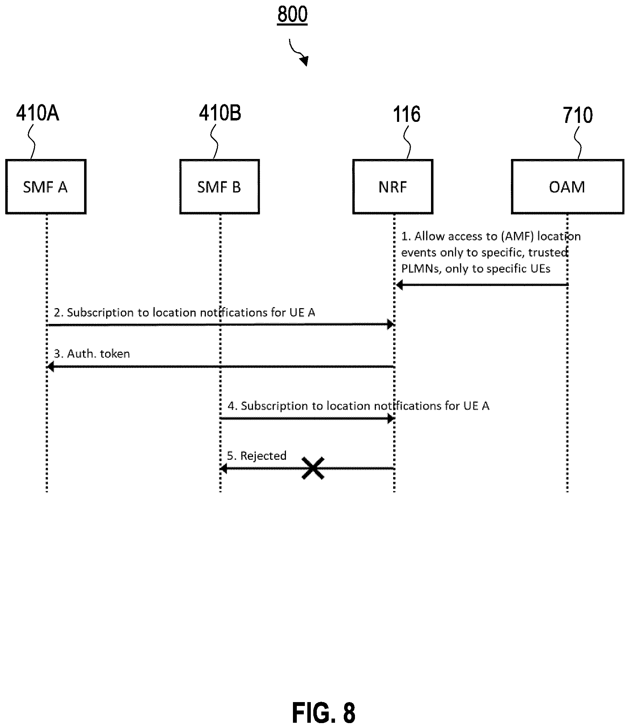

In the example illustrated in Fig. 8, SMF A and SMF B are considered, with SMF B being part of another PLMN.
1. In this example, the network profile 403 contains specific parameter information, which disallows other PLMNs to receive location information of UEs in the network
2. Since SMF A is part of the same PLMN as UE A0, when it requests an authorization token,
3. it is granted
4. However, when SMF B, which belongs to another PLMN, requests an authorization token to operate on UE A (different PLMNs),
5. which is rejected based on the network profile 403.

In the example in Fig. 8, SMF A and SMF B are involved, with SMF B belonging to a different PLMN. The network profile 403 includes specific rules that prevent PLMNs from accessing location information of UE in another PLMN. When SMF A, which belongs to the same PLMN as UE A0, requests an authorization token, the request is approved. However, when SMF B from the other PLMN requests an authorization token to operate on UE A, the request is denied, following the network profile's restrictions.

A similar approach can be combined with other types of rule (allow/disallow), as well as NF types/NF instances, which can be combined with parameter information for a finer granularity.

It is considered that the provided token is thus sent also including the authorization information it is associated with (e.g. the issued token could have a wider scope than requested and could thus be reused for other API calls by the receiving NF).

Whether a network profile, a further network profile and/or a NF profile, as well as allow/disallow takes precedence, is considered by the network profile information containing priority information, or the NRF being configured with said priority information.

Thus, a respective priority may be assigned to the network-level profile 403, a further network-level profile 403 and/or the NF profile 401. The processor 406 my be configured to determine the authorization by resolving conflicts between the network-level profiles 403 and the NF profiles 401 based on the assigned priorities. To implement this, the processor 406 may need a system to assign and recognize priority levels for both the network-level profiles 403 and the NF profiles 401. Each profile contains rules that may conflict with one another, for example, when a network-wide policy allows an action, but an NF-specific rule restricts it. To resolve these conflicts, the system would first assign a priority to each profile, indicating which set of rules should take precedence. Technically, when an authorization request arrives, the processor 406 may evaluate the request against both profiles. If the policies in the profiles align, the authorization token can be issued based on those rules. However, if there's a conflict, such as the network-level profile 403 allowing access but the NF profile 401 denying it, the processor 406 may refer to the assigned priority. For instance, if the network-level profile 403 is assigned a higher priority, its rule would override the NF-specific restriction, and the authorization would proceed. Conversely, if the NF profile 401 has higher priority, its more restrictive rule would be enforced, and the authorization request would be denied. For instance, it is possible to define a network-level profile applying to the whole network and subnetwork-level applying to only part of the network, such that one takes precedence over the other.

In some embodiments, determining the authorization token comprises giving the authorization policy information of the network-level profile 403 precedence over entity-specific authorization policy information of the NF profile 401. When determining the authorization token, giving precedence to the authorization policy information of the network-level profile 403 over the entity-specific information in the NF profile 401 means that the broader, network-wide rules take priority in cases where there is a conflict between the two profiles. The network-level profile 403 contains general policies that apply across multiple NFs, while the NF profile 401 holds specific rules for individual NF instances or services. Technically, when an authorization request is received, the processor 406 may first evaluate the request against both the network-level profile 403 and the NF profile 401. If the policies in both profiles are consistent, the authorization token is generated based on the aligned rules. However, if there is a conflict between the network-level policy and the NF-specific policy-for example, if the NF profile 401 restricts access while the network-level profile 403 allows it-the processor 406 may prioritize the network-level profile 403. This means that the broader network-wide permission would override the restriction in the NF profile, and the requesting entity would be granted access.

In some embodiments, determining the authorization token comprises applying network-level access rules defined in the network-level profile 403 to enforce more restrictive permissions on the authorization token, where the network-level profile 403 comprises network-level deny-access rules that take precedence over NF-specific allow-access rules in the NF profile. In this scenario, the network-level profile 403 contains deny-access rules that take precedence over more permissive rules in the NF profile 401. This means that even if an NF profile 401 allows access to certain services or operations, the broader network-level profile 403 can override that permission and deny access. The system may be designed to ensure that network-wide security or policy restrictions are not bypassed by specific NF permissions. Technically, when a request for an authorization token is received, the processor 406 may first evaluate the request against the network-level profile 403. If the network-level profile contains deny-access rules for the type of service or NF instance being requested, those rules immediately take precedence. The processor 406 may apply these restrictive permissions to the authorization token, effectively overriding any more permissive rules that might exist in the NF profile 401 of the target entity. This could be implemented by configuring the processor 406 to prioritize deny rules during the policy evaluation process. Even if the NF profile 401 allows access to a particular resource, the processor 406 may first check the network-level profile 403 for any deny rules. If a deny rule exists, it stops further evaluation of the NF profile 401 and enforces the network-level restriction. This may ensure that any network-wide security policies, such as restricting access to sensitive data or specific regions, are enforced consistently and regardless of NF profile-level rules.

The authorization request may include details such as an NF instance identifier or NF service instance identifier of the requesting entity 420, the NF type or service required from the target NF 410, and other additional parameters related to the service being requested. This could be implemented by having the requesting NF 420 send a structured request to the NRF 116, including identifiers that specify which instance or service it wants to access. This detailed request allows the NRF 116 to tailor the authorization token based on both the type of service requested and the specific instance of the requesting NF. This may ensure that access requests are specific and targeted, allowing for precise control over which resources are accessed.

The authorization request may contain information about what operations or services the requesting entity 420 is allowed to access from the target NF 410, as well as what specific parameters it is allowed to access. This may be implemented by embedding detailed permission data into the OAuth 2.0 token issued by the NRF 116. When the target NF 410 receives the token, it can check the allowed operations or services listed within it before granting access. This approach to authorization may ensure that each token is tightly scoped, preventing unauthorized operations or data access.

The requesting entity 420 may use the issued authorization token for subsequent requests to the target NF 410 to access its services. This may be implemented using OAuth 2.0 protocols, where the requesting NF 420 provides the token in each API request it makes to the target NF 410. The target NF 410 may check the token to verify that the requesting entity 420 is authorized to access the service.

The authorization token may include a validity period, allowing the NRF 116 to restrict access to the target NF 410 for a specific duration. This may be implemented by embedding an expiration timestamp within the token itself, which may be checked by the target NF 410 each time the token is used. If the token has expired, the request would be denied. This may ensure that access is temporary and aligned with the time-bound policies.

The authorization token may be reusable for multiple service operations of the target NF 410 by the requesting entity 420, as long as the operations fall within the scope of the permissions specified in the network-level and NF profiles. This could be implemented by issuing a token with one or more authorized operations and/or one or more scopes listed within it. Each time the requesting NF 420 interacts with the target NF 410, the target NF 410 may check the token to ensure the requested operation is permitted.

The NRF 116 may have an API that allows OAM entity 710 to dynamically modify the network-level profile 403 without affecting individual NF profiles 401. This may be implemented through a RESTful API provided by the NRF 116, where network administrators can update or modify the network-wide rules in response to changing network conditions. This dynamic approach may allow for real-time adaptability in managing authorization policies across the network without disrupting individual NF configurations.

Intent-based deployments refer to a current trend of network/instance/system deployment in which a desired end state of a system is described, and a deployment engine/orchestrator is tasked with always keeping that target state up. This requires a
- initial mapping of the desired end state to a configuration of individual elements
- closed-loop monitoring of the system, which (re-)configures, terminates, (re-)instantiates and/or (re-)deploys elements of the system in order to reach the desired end state, e.g. after a failure of one or more instances

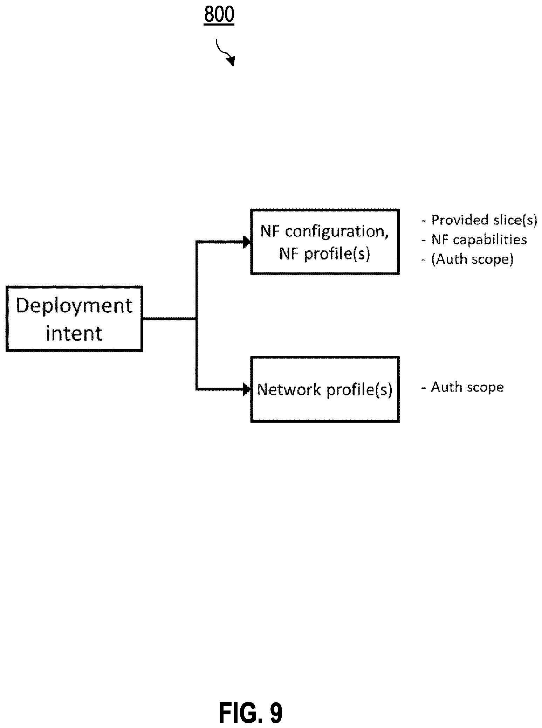

To cover this deployment aspect, the network-level profile 403 may be updated based on a deployment intent from an orchestrator, with the profile 403 being dynamically generated or modified to reflect the desired state of the network. This could be technically implemented by having the orchestrator communicate deployment changes to the NRF 116 via a control plane interface. The NRF 116 may then modify the network-level profile 403 (in real-time) to reflect changes, such as new NF instances or modified policies. This process is illustrated in Fig. 9.

Fig. 9 illustrates a relationship between Deployment Intent, NF configuration and profiles 401, and network-level profiles 403. It shows how a deployment intent, which may originate from a higher-level orchestrator or management system, may influence both the NF profiles 401 and the network-level profiles 403. The deployment intent represents the desired state or configuration for the network and guides how the individual NFs are configured and how their specific profiles are defined. On one side, the NF configuration and profiles 401 contain detailed information about the permissions, services, and operational parameters for each NF or NF instance. These are tailored to each specific NF, defining its behavior and interactions within the network. On the other side, the network-level profiles 403 represent the overarching policies that apply across multiple NFs. These profiles govern the general access rules, permissions, and security measures at a network-wide level, ensuring consistency and alignment with the network's overall objectives. The deployment intent connects both these elements, ensuring that the configuration and policies for each NF, as well as the network-wide policies, are aligned with the intended deployment and operational goals.

Thus, network conditions may be monitored and the network-level profile 403 may be adjusted in real-time to enforce access restrictions based on factors like network load, security threats, or policy updates. This could be implemented using real-time network monitoring systems that report key metrics or threats to the NRF 116. The NRF 116 may then dynamically adjust its access policies to reflect these conditions, for example, by restricting access during periods of congestion or in response to detected security incidents

The present disclosure proposes methods and apparatuses for managing NF authorization in a (5G) mobile communication network, specifically using an NRF. The present disclosure addresses the need for a more flexible and dynamic authorization framework that can adapt to the complexities and changing conditions of 5G networks. The 5G Core Network (5G CN) relies on a Service-Based Architecture (SBA), where NFs communicate via APIs. Traditional methods for authorization, which rely on static NF profiles, face challenges in adapting to network changes. These static profiles are inflexible and require manual updates, leading to possible inconsistencies and security vulnerabilities, especially as networks scale. To solve this, the present disclosure proposes storing a network-level profile at the NRF, containing authorization policies that apply across multiple NFs. This allows for centralized and efficient management of access permissions. Unlike static NF profiles, which apply only to specific NFs, the network-level profile provides global rules that can be applied across the entire network or customized for specific parts, such as certain locations, regions, or network slices.

The proposed aspects allow the NRF to generate authorization tokens by considering both the network-level profile and the NF profiles of the requesting and target entities. This allows the system to handle more dynamic and fine-grained authorization, enabling context-aware access control based on various parameters like NF types, service types, and even geographical locations. The authorization concept may resolve conflicts between the network-level and NF-specific rules by assigning priorities, ensuring that broader network-wide policies take precedence when necessary.

Moreover, proposed aspects support dynamic updates of the network-level profile, either through an OAM entity or based on a deployment intent from an orchestrator. In this way, network policies can evolve in real-time, adapting to changing network conditions, without needing to manually update each NF profile.

In summary, the present disclosure improves the flexibility, security, and scalability of NF authorization in 5G networks by centralizing control through the NRF and supporting dynamic, policy-driven authorization decisions.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (500) for managing network function, NF, authorization in a mobile network using a network repository function, NRF (116), the method comprising:
storing (510), at the NRF (116), a network-level profile (403) comprising authorization policy information defining permissions and/or access rights applicable across multiple NF entities;
receiving (520), by the NRF (116), a request for an authorization token from a requesting entity (420) to access a target NF entity (410);
determining (530), by the NRF (116), the authorization token based on at least the network-level profile (403); and
issuing (540), by the NRF (410), the authorization token to the requesting entity (420) based on the determined authorization.

2. The method (500) of claim 1, further comprising
storing, at the NRF (116), one or more NF profiles (401) associated with respective NF entities, wherein a respective NF profile (401) comprises entity-specific authorization policy information defining permissions and/or access rights applicable for the respective NF entity;
determining, by the NRF (116), the authorization token
based on only the network-level profile (403), or
based on both the network-level profile (403) and the NF profile (401) of the target NF entity, or
based on both the network-level profile (403) and the NF profile (401) of the requesting entity, or
based on the network-level profile (403), the NF profile (401) of the target NF entity, and the NF profile (401) of the requesting entity.

3. The method (500) of claim 2, wherein determining (530) the authorization token comprises intersecting the network-level profile (403) and the NF profile (401) of the target NF entity and/or the network-level profile and the NF profile of requesting entity.

4. The method (500) of claim 2 or 3, further comprising
assigning a respective priority to the network-level profile (403), and/or a further network-level profile (403), and/or the NF profile (401), and
determining (530) the authorization token by resolving conflicts between the network-level profile (403), and/or the further network-level profile (403), and/or the NF profile (401) based on the assigned priorities.

5. The method (500) of any one of claims 2 to 4, wherein determining (530) the authorization token comprises giving the authorization policy information of the network-level profile (403) precedence over entity-specific authorization policy information of the NF profile (401).

6. The method (500) of claim 5, wherein determining (530) the authorization token comprises
applying network-level access rules defined in the network-level profile (403) to enforce more restrictive permissions on the authorization token, where the network-level profile (403) comprises network-level deny-access rules that take precedence over NF-specific allow-access rules in the NF profile (401).

7. The method (500) of any one of the previous claims, wherein the network-level profile (403) comprises one or more access control rules that define whether certain types of NF entities are permitted or denied access to specific services of other NF entities.

8. The method (500) of claim 7, wherein the network-level profile (403) comprises one or more match parameters determining when a particular access control rule should be applied across multiple NF entities and/or one or more validity criteria determining when a particular network-level profile (403) is valid.

9. The method (500) of claim 8, wherein the one or more match parameters comprise
an NF type for which the particular access control rule should be applied,
an NF service type for which the particular access control rule should be applied,
a location, group, zone or region, for which the particular access control rule should be applied,
a network identifier for which the particular access control rule should be applied,
a time for which the particular access control rule should be applied.

10. The method (500) of any one of the previous claims, wherein the network-level profile (403) comprises one or more parameter-based access rules specifying criteria under which a requesting entity is allowed to access services of a target NF entity, including at least one of:
one or more subscriber identifiers and/or a subscriber identifier range for which the particular access control rule should be applied,
one or more NF instance identifiers and/or NF service instance identifiers for which the particular access control rule should be applied,
one or more network slice identifiers for which the particular access control rule should be applied,
one or more network identifiers for which the particular access control rule should be applied,
one or more country identifiers for which the particular access control rule should be applied,
one or more parameter types and/or values for which the particular access control rule should be applied.

11. The method (500) of any one of the previous claims, wherein the request for an authorization comprises at least one of
an NF instance identifier and/or NF service instance identifier of the requesting entity,
an NF type or service required from the target NF,
additional parameters related to a service being requested.

12. The method (500) of any one of the previous claims, wherein the authorization token comprises information associated to what operations and/or services the requesting entity is allowed to access from the target NF entity and/or what parameters the requesting entity is allowed to access from the target NF entity.

13. The method (500) of any one of the previous claims, further comprising
the requesting entity using the authorization token for a subsequent request to the target NF entity to access its service.

14. The method (500) of any one of the previous claims, wherein the NRF (116) comprises an API for dynamic modification of the network-level profile by an operations, administration, and maintenance, OAM, entity (710) to adapt to changing network conditions without modifying NF profiles.

15. The method (500) of any one of the previous claims, further comprising
updating the network-level profile based on a deployment intent received from an orchestrator, wherein the network-level profile is dynamically generated or modified to reflect a desired end state of the network.
